Europäisches Patentamt

European Patent Office

Office européen des brevets

(19)

(11) Publication number: **0 445 463 A1**

# EUROPEAN PATENT APPLICATION

(12)

(21) Application number: **90311701.8**

(22) Date of filing: **25.10.90**

(51) Int. Cl.⁵: **G06F 13/42**

A request for correction to the description to replace the reference to the appendix by a reference to the published EISA specification has been filed pursuant to Rule 88 EPC. A decision on the request will be taken during the proceedings before the Examining Division (Guidelines for Examination in the EPO, A-V, 2.2).

(30) Priority: **03.11.89 US 431744**

(43) Date of publication of application:
**11.09.91 Bulletin 91/37**

(84) Designated Contracting States:
**DE FR GB IT NL**

(71) Applicant: **Compaq Computer Corporation**

20555 S.H. 249
Houston Texas 77070(US)

(72) Inventor: **Mayer, Dale J.**
14918 Forest Lodge Drive
Houston, Texas 77070(US)
Inventor: **Culley, Paul R.**
13010 Marron Drive
Cypress, Texas 77429(US)
Inventor: **Goodrum, Alan L.**
12610 Cloverwood
Cypress, Texas 77429(US)

(74) Representative: **Brunner, Michael John** et al
GILL JENNINGS & EVERY 53-64 Chancery Lane
London WC2A 1HN(GB)

(54) **Bus clock extending memory controller.**

(57) A memory controller (62) provides a stretch signal to a bus controller (48) which develops the synchronizing signal (BGLK) used on a synchronized bus (46), alleviating the need to insert a full wait state during memory read operations. The memory (58) is located off a second bus (44) which is tightly coupled to the processor (20), but devices operating according to the protocol of the synchronized bus can access the memory. The memory controller (62) controls the buffers and address multiplexing between the second bus and the memory devices, while the bus controller (48) controls the buffering and latching between the first and second buses. The memory controller also develops the row and column address strobes used by the memory devices.

FIG.1A

FIG.1B

EP 0 445 463 A1

# BUS CLOCK EXTENDING MEMORY CONTROLLER

The invention relates to computer systems using dynamic random access memories more particular to computer systems allowing memory operations to be performed by masters other than the, system processor.

Personal computer systems have been getting faster and more powerful at a rapid rate and yet more speed and power is always being demand. To this end 32 bit microprocessors with ever higher clock rates have been employed. Recently several standards using 32 bit wide address and data buses have been developed which allow interchangeable circuit boards to be utilized which have a 32 bit data path and operate at a high speed relative to previous the older standards utilized in personal computer systems. One such interface is referred to as the Extended Industry Standard Architecture (EISA), an extension of the architecture developed by IBM Corporation for use in the IBM PC/AT, a 24 bit address bus, 16 bit data bus based computer system.

While the EISA specification allows for 32 bit devices, such as memory, to be incorporated into the interchangeable circuit board busing structure, it is still desirable that the main portion of the memory utilized by the computer system be located on a separate bus which is more tightly coupled to the system microprocessor. To this end numerous buffers and latches are inserted in the address and data path between the interchangeable circuit boards and the memory devices so that under certain conditions relatively long propagation delays are developed. When these delays are coupled with the desire to use the slowest memory possible for economic reasons then problems develop. Conventional 80 nanosecond page mode memory devices are not sufficiently fast to allow certain types of operations, particularly burst mode operations, to occur over the EISA bus and therefore a wait state of some sort must be inserted, thus defeating in most cases the entire purpose of interring a burst mode, to allow very high speed transfers.

The EISA specification, of which version 3.1 is included as Appendix 1, defines the basic memory cycle clock rate over for the EISA bus as two signal cycles of a synchronizing signal referred to as the BCLK signal, which has a clock rate from 6 to 8.33 MHz. A full wait state thus adds at least 120 nsec to the cycle, relatively dramatically slowing down operations. The alternative is to use faster memories but this has the disadvantage that these memories cost more and therefore the cost of the entire computer system is increased. Thus a choice conventionally would be required to either add a wait state, a full BCLK signal cycle delay, or to use the faster memories.

The memory controller of the present invention allows the use of 80 nanosecond paged mode memory devices without requiring a full BCLK signal cycle wait state when performing read operations from the EISA bus to memory located on a tightly coupled bus. This is performed by having the memory controller indicate to the bus controller, at the appropriate time, to stretch the BCLK signal, which is developed by the bus controller, by one microprocessor clock signal cycle, which in the preferred embodiment is 30 nanoseconds, thus allowing certain critical operations to be performed using the more inexpensive memories and yet without requiring a full wait state to be developed.

A better understanding of the present invention can be obtained when the following detailed description of the preferred embodiment is considered in conjunction with the following drawings, in which:

Figures 1 and 2 are schematic block diagrams of a computer system incorporating the present invention;

Figures 3-7 are timing diagrams of the present invention;

Figure 8 is a block diagram of portions of the host memory controller of Fig. 1;

Figure 9 is a state diagram of the state machine of Fig. 8;

Figure 10-18 and 21-23 are schematic diagrams of portions of the circuitry of the host memory controller of Fig. 7;

Figure 19 is a schematic block diagram of the data buffer of Figure 1; and

Figure 20 is a timing diagram of the clocking signals used by the circuitry of Figures 10-18 and 21-23.

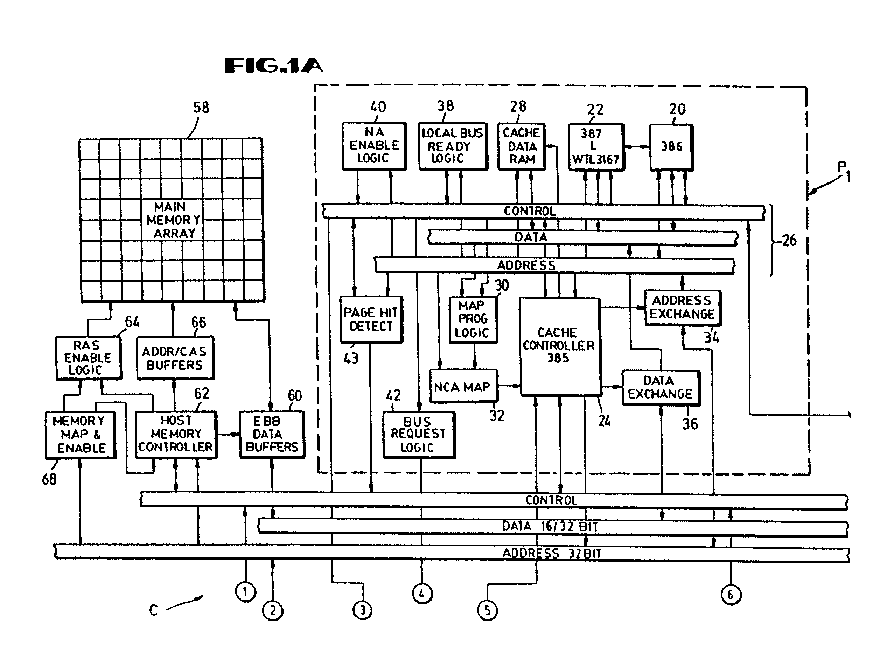

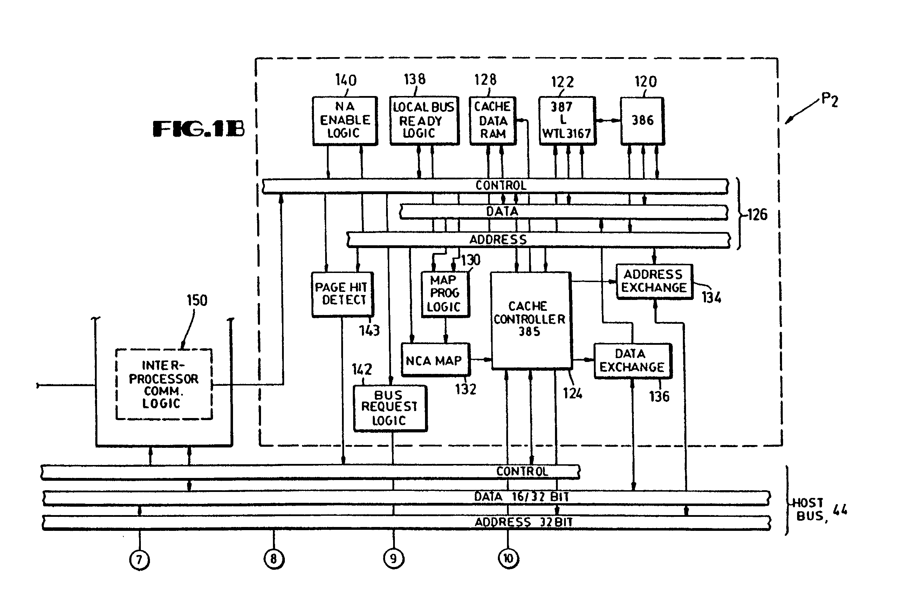

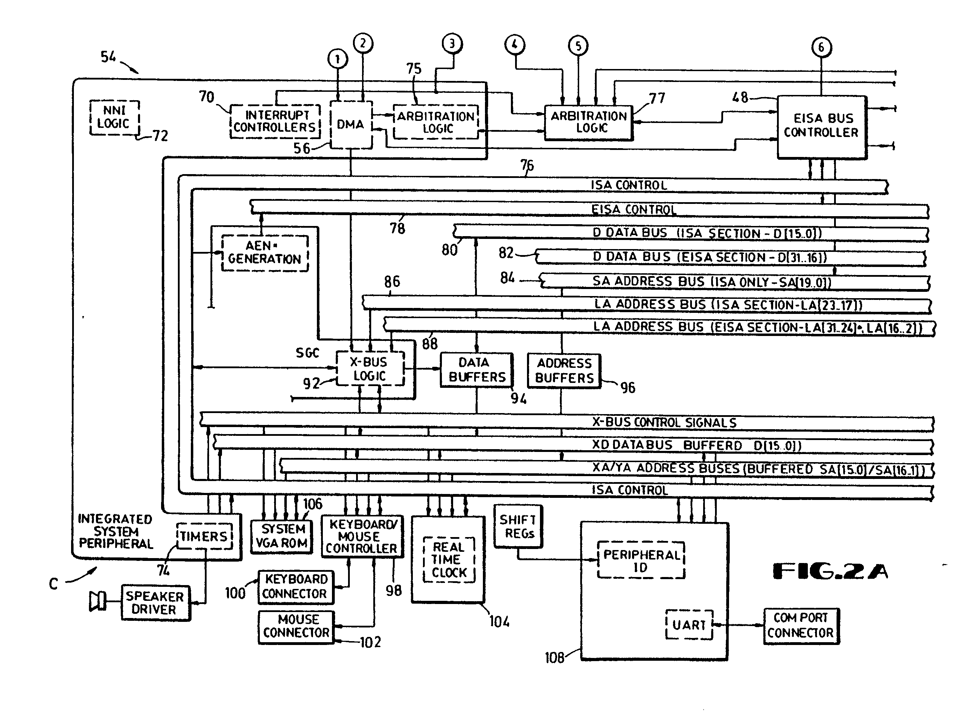

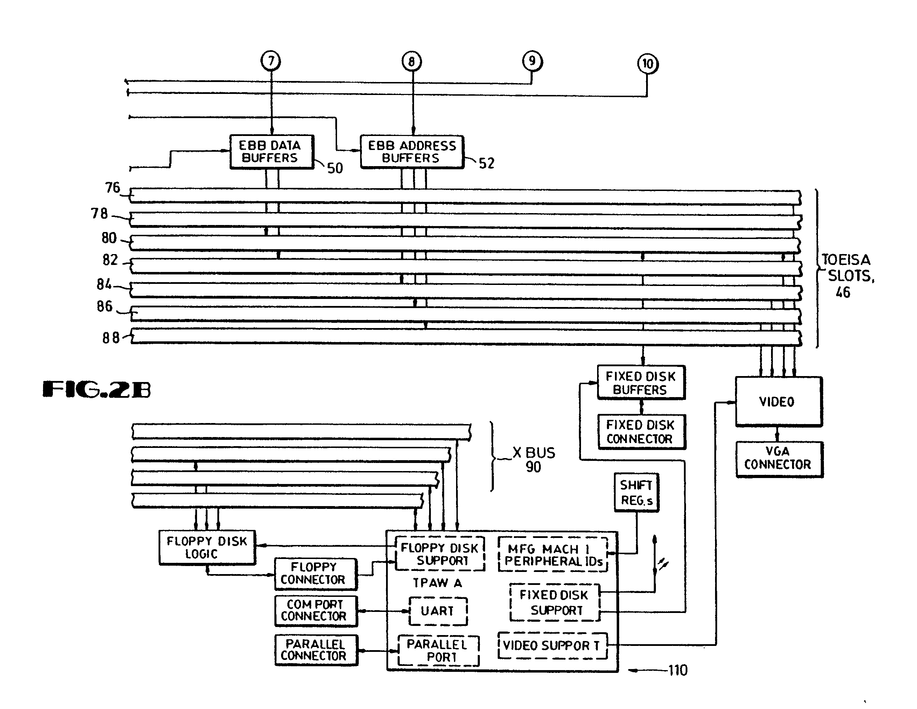

Referring now to Figures 1 and 2, the letter C designates generally a computer system incorporating the present invention. For clarity, system C is shown in two portions, with the interconnections between Figures 1 and 2 designated by reference to the circled numbers one to ten. System C is comprised of a number of block elements interconnected via a plurality of buses. Throughout this specification, signal mnemonics with an asterisk following the signal descriptors indicates the signal is active at a logic low level and is the inverse of the signal descriptor without the asterisk. Signal mnemonics having numbers or ranges between angled brackets refer to those particular bits or portions in a bus.

In Figure 1, a computer system is depicted. A processing unit P1 comprises a processor 20, a numerical coprocessor 22 and a cache memory controller 24 and associated logic circuits connected to a local processor bus 26. Associated with cache controller 24 is high speed cache data random access memory 28, noncacheable memory address map programming logic circuitry 30, noncacheable address memory 32, address exchange latch circuitry 34, and data exchange transceiver 36. Associated with the processor unit P1 also are local bus ready logic circuit 38, next address enable logic circuit 40 and bus request logic circuit 42.

The processor 20 is preferably an Intel 80386 microprocessor. The processor 20 has its control, address and data lines interfaced to the local processor bus 26. The coprocessor 22 is preferably an Intel 80387 and/or Weitek WTL 3167 numeric coprocessor interfacing with the local processor bus 26 and the processor 20 in the conventional manner. The cache ram 28 is preferably suitable high-speed static random access memory which interfaces with the address and data elements of bus 26 under control of the cache controller 24 to carry out required cache memory operations. The cache controller 24 is preferably an Intel 82385 cache controller configured to operate in two-way set associative master mode. In the preferred embodiment the components are the 33 MHz versions of the respective units. Address latch circuitry 34 and data transceiver 36 interface the cache controller 24 with the processor 20 and provide a local bus interface between the local processor bus 26 and a host bus 44, according to conventional practice in an 80386 and 82385 based system.

Circuit 38 is a logic circuit which provides a bus ready signal to control access to the local bus 26 and indicate when the next cycle can being. The enable circuit 40 is utilized to indicate that the next address of data or code to be utilized by subsystem elements in pipelined address mode can be placed on the local bus 26.

Noncacheable memory address map programmer 30 cooperates with the processor 20 and the noncacheable address memory 32 to map noncacheable memory locations. The noncacheable address memory 32 is utilized to designate areas of system memory that are noncacheable to avoid many types of cache memory incoherency. The bus request logic circuit 42 is utilized by the processor 20 and associated elements to request access to the host bus 44 in situations such as when requested data is not located in the cache memory 28 and access to system memory is required. A page hit detector 43 is connected to the local processor bus 26 to allow the earliest possible determination of whether a cache miss cycle will be a memory page hit.

Alternatively an Intel 80486 microprocessor and an external cache memory system can be used in the processing unit P1.

In the drawings, system C is configured having the processor bus 26, the host bus 44, an extended industry standard architecture (EISA) bus 46 (Fig. 2) and an X bus 90. Many of the details of the portion of the system illustrated in Figure 2, and not discussed in detail below, are not significant to the present invention other than to illustrate an example of a fully configured computer system. The EISA specification Version 3.1 is included as Appendix 1 to fully explain requirements of an EISA system. The portion of system C illustrated in Fig. 2 is essentially a configured EISA system which includes the necessary EISA bus 46, an EISA bus controller 48, data latches and transceivers 50 and address latches and buffers 52 to interface between the EISA bus 46 and the host bus 44. The bus controller 48 is preferably the 82358 EISA bus controller manufactured by Intel. One of the functions of the bus controller 48 is to provide the BCLK signal, the basic synchronizing signal of the EISA bus 46. This BCLK signal is developed by dividing the clock signal provided to the processor 20 by a predetermined amount, such as eight if the CLK2 signal pas a frequency of 66 MHz and six if the CLK2 signal has a frequency of 50 MHz and the processor 20 is an 80386 or if the processor 20 is an 80486 then the CLK1 signal is used and divided four or three for 33 MHz or 25 MHz CLK1 signal frequencies. The BCLK signal is approximately a 50% duty cycle signal, except that it can be made asymmetric by use of the STRETCH* signal, which delays the next edge of the BCLK signal. More details will be provided.

Also illustrated in Figure 2 is an integrated system peripheral 54, which incorporates a number of the elements used in an EISA based computer system. The integrated system peripheral (ISP) 54 includes a direct memory access controller 56 for controlling access to main memory 58 (Fig. 1) or memory contained in EISA slots and input/output (I/O) locations without the need for access to the processor 20. The main memory array 58 is considered to be local memory and comprises a memory circuit array of size suitable to accommodate the particular requirements of the system. The ISP 54 also includes interrupt controllers 70, nonmaskable interrupt logic 72 and system timers 74 which allow control of interrupt signals and generate necessary timing signals and wait states in a manner according to the EISA specification and conventional practice. In the preferred embodiment, processor generated interrupt requests are controlled via dual interrupt control circuits emulating and extending conventional Intel 8259 interrupt controllers. The 15P 54 also includes bus arbitration logic 75 which, in cooperation with the bus controller 48 and overall arbitration logic 77, controls and arbitrates among the various requests for the EISA bus 46 by the cache controller 24, the DMA controller 56 and bus master devices located on the EISA bus 46.

The main memory array 58 is preferably 80 nsec page mode dynamic random access memory Memory 58 interfaces with the host bus 44 via a data buffer circuit 60, a memory controller circuit 62 and a memory mapping and enable circuitry 68. The buffer 60 performs data transceiving and parity generating and checking functions. The memory controller 62 and the memory mapping circuitry 68 interface with the memory 58 via address multiplexer and column address strobe buffers 66 and row address enable logic circuit 64. The memory controller 62 also receives a signal from the page hit detector 43 to control operation. The memory controller 62 will be described in more detail.

The EISA bus 46 includes ISA and EISA control buses 76 and 78, ISA and EISA data buses 80 and 82 and address buses 84, 86 and 88. System peripherals are interfaced via the X bus 90 in combination with the ISA control bus 76 from the EISA bus 46. Control and data/address transfer for the X bus 90 are facilitated by X bus control logic 92, data transceivers 94 and address latches 96.

Attached to the X bus 90 are various peripheral devices such as keyboard/mouse controller 98 which interfaces the X bus 90 with a suitable keyboard and mouse via connectors 100 and 102, respectively. Also attached to the X bus 90 are read only memory circuits 106 which contain basic operations software for the system C and for system video operations. A serial communications port 108 is also connected to the system C via the X bus 90. Floppy and fixed disk support, a parallel port, a second serial port, and video support circuits are provided in block circuit 110.

In the preferred embodiment two similar processor units P1 and P2 can be located on the host bus 44. Processor unit P2 is similar to processor unit P1, with like circuits having the same reference number plus 100. The overall arbitration logic 77 is adapted for use with the two processor units P1 and P2 and arbitrates between the two processor units P1 and P2 to share the CPU arbitration location provided in the EISA specification, To allow interaction between the two processor units P1 and P2, interprocessor communication logic 150 is connected to the host bus 44 and to the processor units P1 and P2.

In general in this specification, a signal name having a first letter of P refers to a signal generally on the local bus 26, with a signal having a first letter of H represents that version of the signal generally on the host bus 44 and a signal having a first letter of M generally represents the version of that signal relating to the memory interface.

The most critical timing path of interest in this description as it relates to the present invention is as follows: the time of the EISA address delay from the falling edge of the BCLK signal in burst cycle cases, the time through the address buffer 52 connecting the EISA bus 46 with the host bus 44, the time for the addresses to pass through the host memory controller 62, the time required to pass through the address buffer 66, the access from column address time (tAA) for the memory devices, the delay of the data buffer 60, the delay of the data buffer 50, the required read setup time and BCLK signal skew. In the computer system C of the preferred embodiment this time totals approximately 200 nsec, whereas only 180 nsec are available in a read situation. An addition of one CLK1 signal cycle, which in the preferred embodiment is 30 nsec and which is half the frequency of the CLK2 signal, thus results in a 60 nsec effective stretch for column address time purposes and in sufficient timing margin to comport with general design principals.

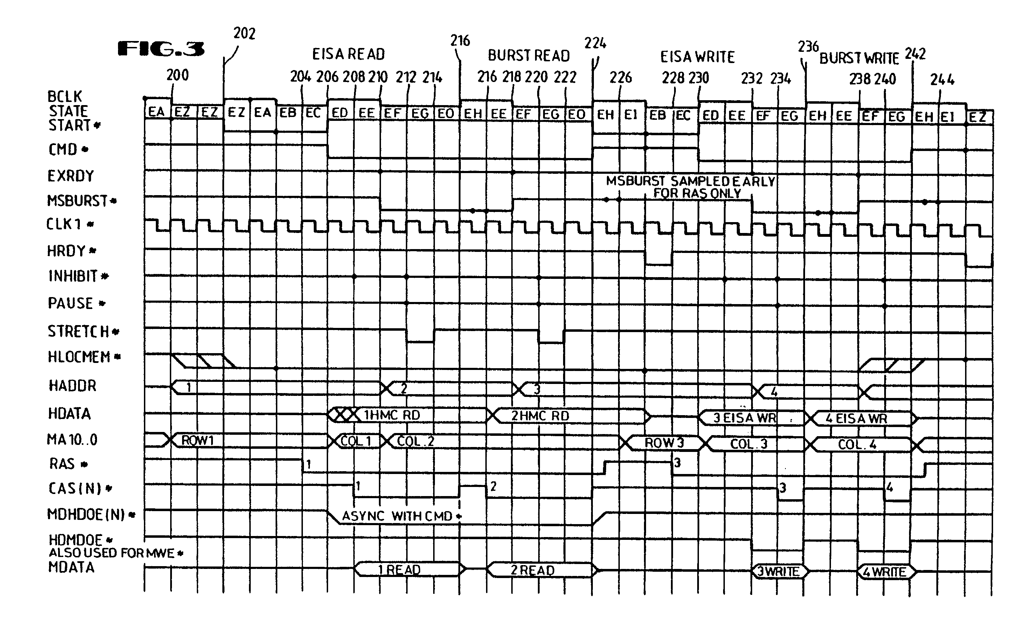

Figures 3-7 illustrate the timing of the present invention, showing the use of the STRETCH signal during read operations to extend the read operation by a single CLK1 signal cycle without having to use faster memory devices or institute a full BCLK signal cycle wait state. The various timings are illustrative of particular cases and variations based on the responses of particular devices are presumed.

Familiarity with the EISA control signals as described in the specification will be presumed. At time 200 the BCLK signal goes low and the addresses are presented onto the host address bus HADDR. Certain of the addresses are then passed through to the memory address lines MA<10-0>. These are the row addresses to be used by the memory devices. On the next rising edge of the BLCK signal the time 202, the START* signal goes low to indicate the presence of valid addresses. At the rising edge of the CLK1* signal, which is generated internally by the memory controller 62, following the falling edge of the BCLK* signal at time 204, the RAS* signal goes low, thus indicating to the memory devices that row addresses are present. At time 206, the rising edge of the BCLK signal, the START* signal goes high and the CMD* signal goes low, indicating that the addresses and control signals should be latched and the data portion of the cycle is beginning. At this time the addresses presented to the memory devices are changed to the column addresses and the MDHDOE* signal goes low so that data is transferred from the memory devices to the host bus 46, because the illustrated cycle is a read operation. At the next rising edge of the CLK1* signal at time 208 the CAS* signal goes low to indicate to the memory devices that a column address is present. In the memory devices of the preferred embodiment the row addresses, column addresses and data are latched on the falling edge of the appropriate strobe signal. At time 208 the data begins appearing from the memory devices and is passed through to the host data bus HDATA.

At time 210, the falling edge of the BCLK signal, the MSBURST* signal goes low to indicate that a burst cycle will be started according to the EISA specification and therefore at this time the address presented on the host bus 46 changes, as do the column addresses presented to the memory devices. There is no need to change the row addresses because during an EISA burst cycle the addresses are within the same page of the memory device. At time 212, the next rising edge of the CLK1* signal, the STRETCH* signal goes low to indicate to the bus controller 48 that the BCLK signal should be extended by at least one CLK1 signal cycle. On the next rising edge of the CLK1* signal at time 214 the STRETCH* signal is removed so that only a single CLK1 signal cycle is added to the BCLK signal phase. At time 216, the rising edge of the BCLK signal, the CAS* signal goes high, thus terminating the reading of data from the memory devices for cycle 1. The data is sampled at this time by the requesting device. The CAS* signal also goes high so that column address strobe precharge time can be developed and so that a new column address can be strobed into the memory devices for the next read operation, which by definition is a page hit because it is a burst operation.

At time 216, the next rising edge of the CLK1* signal, the CAS* signal goes low latching in the column addresses and new data begins appearing on the memory and host data buses because the memory devices are now responding to the column address of cycle 2. At time 218, the next falling edge of the BCLK signal, the MSBURST* signal goes high indicating that the burst is terminating. At this time a new address is presented on the address bus. At time 220, the next rising edge of the CLK1* signal, the STRETCH* signal goes low to indicate to the bus controller 48 the need for an extension to the BCLK signal. At time 222, the next rising edge of the CLK1* signal, the STRETCH* signal goes high so that only a single CLKI signal cycle extension is developed. At time 224, the next rising edge of the BCLK signal, the CAS* signal is raised, thus terminating the read cycle to the memory devices. At this time the data is sampled by the operating device. On the next rising edge of the CLK1* signal at time 226 the memory addresses are changed to the row addresses, which is necessary because a new, non-burst address is being presented. The row addresses must be redeveloped because a burst operation has completed and therefore the access is assumed not to be a page hit operation. The RAS* signal will have gone high approximately one-half CLK1* signal cycle prior to time 226 based on the falling edge of the CLK1* signal. This is to allow a sufficient RAS precharge time.

At time 228, the first rising edge of the CLK1* signal after the next falling edge of the BCLK signal, the RAS* signal is lowered to strobe the row addresses into the memory devices. At time 230, the next rising edge of the BCLK signal, data is placed on the data bus by the controlling device and the column addresses are presented to the memory devices. At time 232, the next falling edge of the BCLK signal, the MSBURST* signal is lowered to indicate the start of a burst cycle and the addresses are exchanged on the address bus to be the address of the next cycle. Also at this time the HDMDOE* signal, which also serves as the write strobe or MWE* signal for the memory devices, is lowered so that the data is transferred from the host bus to the memory data bus MDATA, so that the data can be written to the memory devices. At time 234, the next rising edge of the CLK1* signal, the CAS* signal is lowered so that the memory devices are responding to the column address. The CAS* signal is raised on the next rising edge of the CLK1* signal at time 236, which is also the rising edge of the BCLK signal. At this time new data is presented onto the host data bus HDATA and new column addresses are presented to the memory devices. Additionally the HDMDOE* signal is raised, thus terminating the write operation of cycle 3.

At time 238, the falling edge of the BCLK signal, the MSBURST* signal is raised indicating a completion of a burst cycle, the next address is presented on the host address bus HADDR and the HDMDOE* signal is lowered to allow data to be transferred from the host data bus HDATA onto the memory data bus MDATA and to the memory devices. At time 240, the next rising edge of the CLK1* signal, the CAS* signal goes low to strobe the column address and data into the memory devices. At time 242, the rising edge of the BCLK signal, the CAS* signal and the HDMDOE* signal go high to terminate the write operation. At time 244, the next falling edge of the CLK1* signal, the RAS* signal is raised so that RAS precharge time can be developed for the next memory operation. Thus it can be seen that read operations require the use of a single stretch cycle, whereas write operations do not require the use of the STRETCH* signal delaying the BCLK signal.

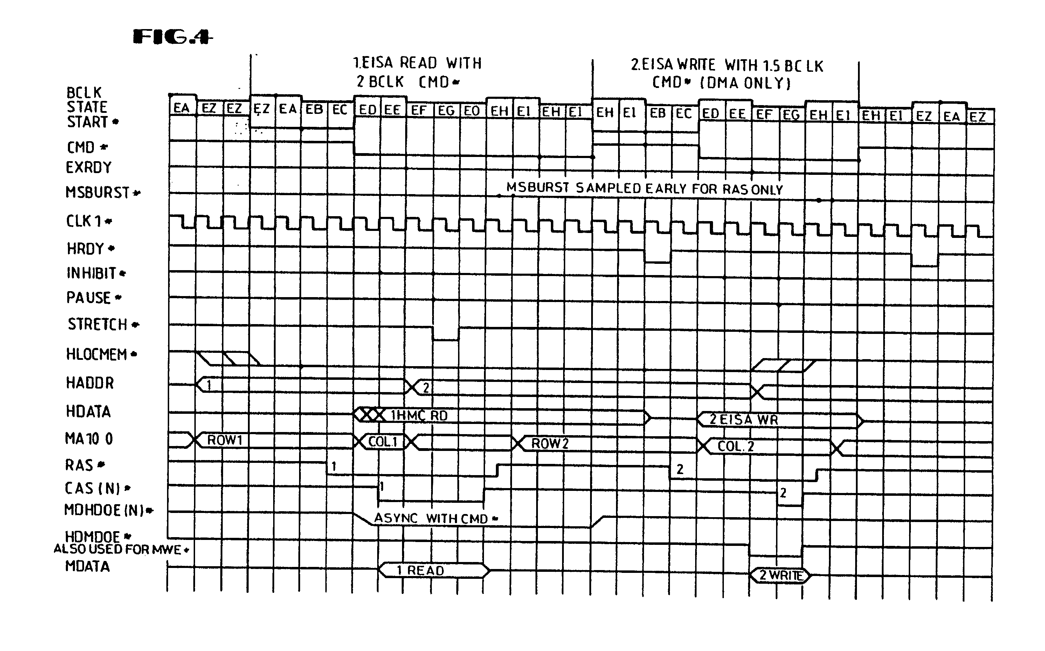

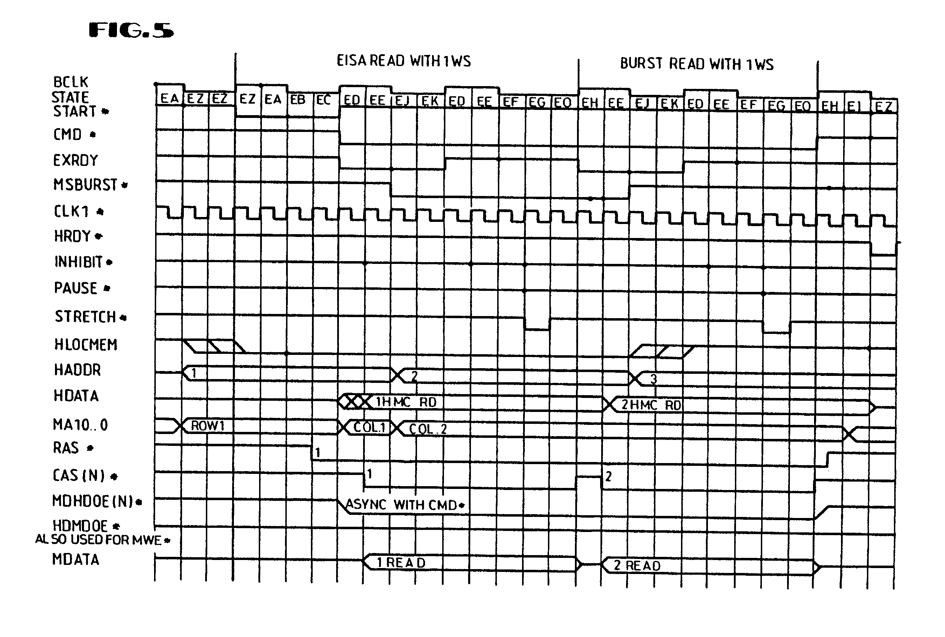

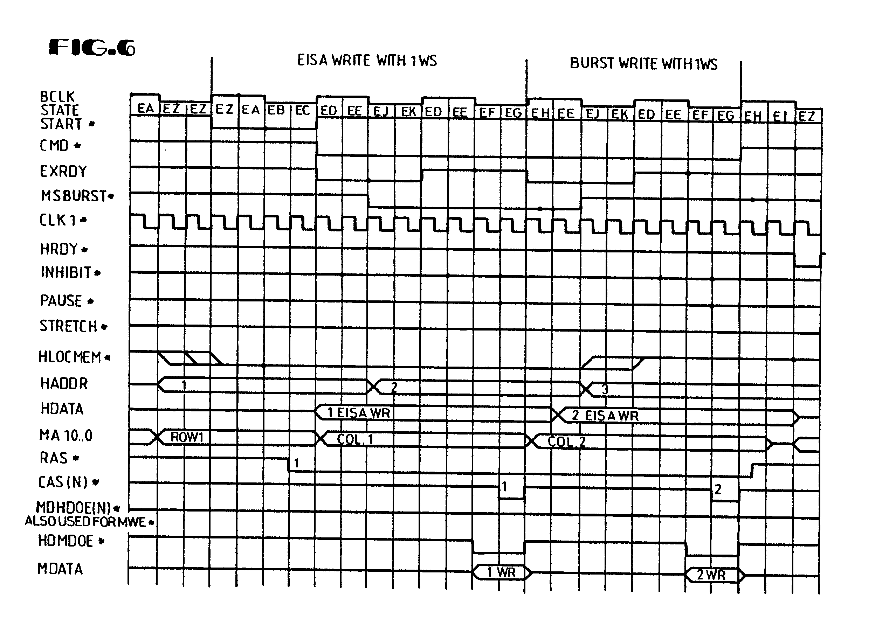

Similar timing diagrams are shown in Figures 4, 5 and 6, with Figure 4 showing read and write operations with long CMD* signal pulses, while Fig. 5 shows conventional reads and burst reads with one wait state inserted and Fig. 6 shows conventional writes and burst writes with one wait state inserted. Only the read operations utilize the STRETCH* signal and then the STRETCH* signal is only one CLK1 signal cycle long.

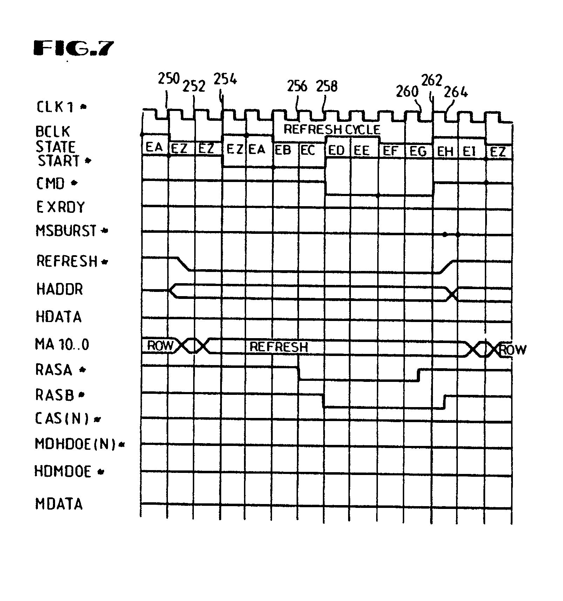

Figure 7 shows a refresh timing cycle. At time 250 the BCLK signal goes low, with the REFRESH* signal going low and the addresses presented on the address bus at that time. At time 252, the next rising edge of the CLK1* signal, the refresh addresses are presented to the memory address bus for presentation to the memory devices. At time 254, the next rising edge of the BCLK signal, the START* signal goes low, while at time 256, the rising edge of the CLK1* signal after the next falling edge of the BCLK signal, the RASA* signal goes low thus indicating to the bank A memory devices that refresh addresses are present. At time 258, the next rising edge of the BCLK signal and the next rising edge of CLK1* signal, the START* signal goes high, the CMD* signal goes low, and the RASB* signal goes low, thus indicating to the second bank of memory devices that refresh addresses are present. The RASA* and RASB* strobes are staggered in refresh cases to reduce the current spike caused by the memory devices. The RASA* signal remains low until the falling edge of the CLK1* signal prior to the next rising edge of the BCLK signal at time 262. At time 262 the CMD* signal goes high, the REFRESH* signal begins going high and the addresses are removed from the host address bus HADDR. At time 264, the next falling edge of the CLK1* signal, the RASB* signal is raised, thus removing the row strobe from the memory devices in bank B. Thus refresh operations are performed without stretching.

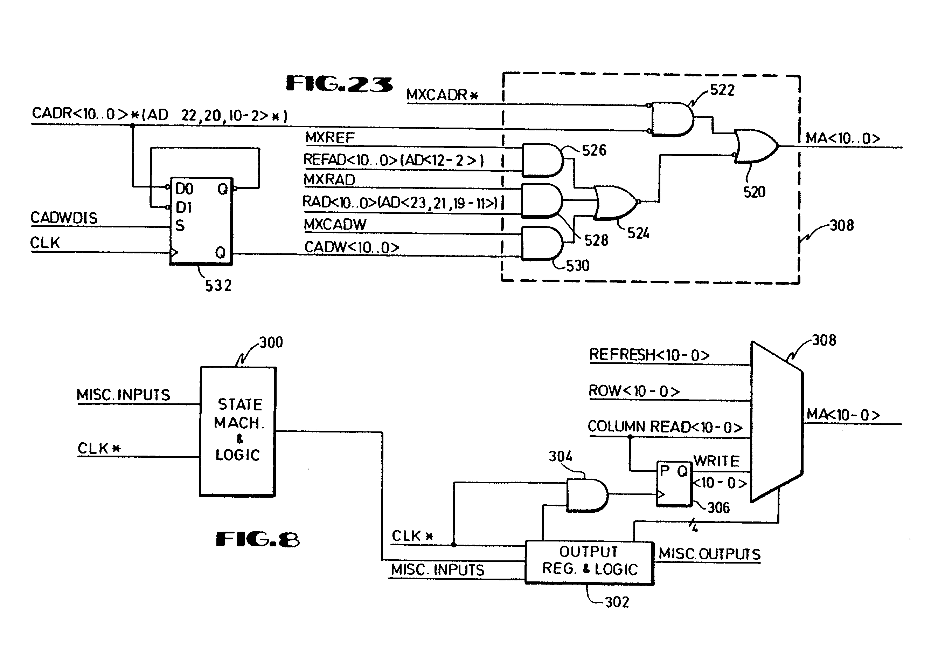

A high level block diagram of portions of the host memory controller 62 is shown in Fig. 8. A state machine and associated logic block 300 has as its inputs a clock signal CLK* and various miscellaneous inputs received from the host bus 44 and the EISA bus 46. The CLK signal is generated by combination of the CLK2* and CLK1* signals as shown in Fig. 20. A series of outputs are provided by the state machine and associated logic block 300 to output register and logic circuitry 302. The output register and logic circuitry 302 has a series of inputs and a series of outputs and additionally has the CLK* signal as an input for clocking purposes. One output of the output register and logic circuitry 302 is connected to one input of a 2 input AND gate 304 whose other input is the CLK* signal. The output of the AND gate 304 is connected to the input to an 11 bit wide D-type flip-flop 306. The AND gate 304 is not actually present in the preferred embodiment but is shown in Figure 8 for conceptual and illustrative purposes. The actual circuitry in the preferred embodiment is shown in Fig. 13 and 23. The inputs to the flip-flop 306 are the COLUMN READ<10-0> signals. The flip-flop 306 is used to latch the column write addresses so that the memory cycle can be terminated earlier than otherwise normally possible. An 11 bit wide 4:1 multiplexer 308 is utilized to couple the four types of addresses in this case to the MA<10-0> lines. The four inputs to the multiplexer 308 are the REFRESH<10-0> signals, the ROW<10-0> signals, the COLA READ<10-0> signals and the COLUMN WRITE<10-0> signals which are provided by the output of latch 306. The control of the multiplexer 308 is provided by four signals output from the output register and logic circuitry 302. The refresh addresses are used because the main memory array 58 is preferably formed of DRAM's and therefore refreshing is necessary. These portions of the memory controller 62 will be described in more detail.

A block diagram of the data buffer 60 is shown in Fig. 19. The data buffer 60 provides the parity generation, latching and transceiving functions necessary to transfer data between the memory array 58 and the host bus 44. The memory data bus bits <31-0> are connected to the D inputs of a 32 bit wide transparent latch 320. The outputs of the latch 320 are connected to a 32 bit wide buffer 322 whose inverted tri-state control input has connected to it the MDHDOE* signal. The output of the buffer 322 is connected to the HD<31-0> lines that form the data bus of the host bus 44. The CAS* signal is connected to the inverted gating input of the latch 320. Thus when the CAS* signal is low the data is being passed through the latch 320. This provides transfer from the memory data bus to the host data bus 44. A similar 32 bit transparent latch 324 has connected to its D inputs the HD<31-0> lines from the host bus 44 and has its outputs connected to a 32 bit tri-state buffer 326 whose inverted tri-state control input is connected to the HDMDOE* signal. The outputs of the buffer 326 are connected to the MD<31-0> lines, thus allowing the 32 bits of data to be transferred from the host bus 44 to the memory data bus. Also connected to the MD<31-0> lines is a parity generator/checker 328 to provide the parity information and checking generally utilized with dynamic RAM's. The CAS* signal is connected to the input of an inverter 330 whose output is connected to the inverted enable input of the latch 324. In this manner, the data which is present on the host bus 44 is transmitted through the latch 324 whenever the CAS* signal is high, so that when the CAS* signal goes low, this data is then latched, thus allowing extension of the period of the data available, thus cooperating with the latched addresses as done in the memory controller 62. Preferably the various latches 320 and 324 and buffers 322 and 326 are implemented as byte wide devices with the appropriate CAS* signals being used for each byte lane so that only properly requested bytes are latched. The data buffer 50 between the host bus 44 and the EISA bus 46 is similarly configured, with the gating and output controls being provided by the bus controller 48. One difference is that the data buffer 50 includes more individualized control of the various byte lanes because of the data assembly and disassembly retirements of an EISA system.

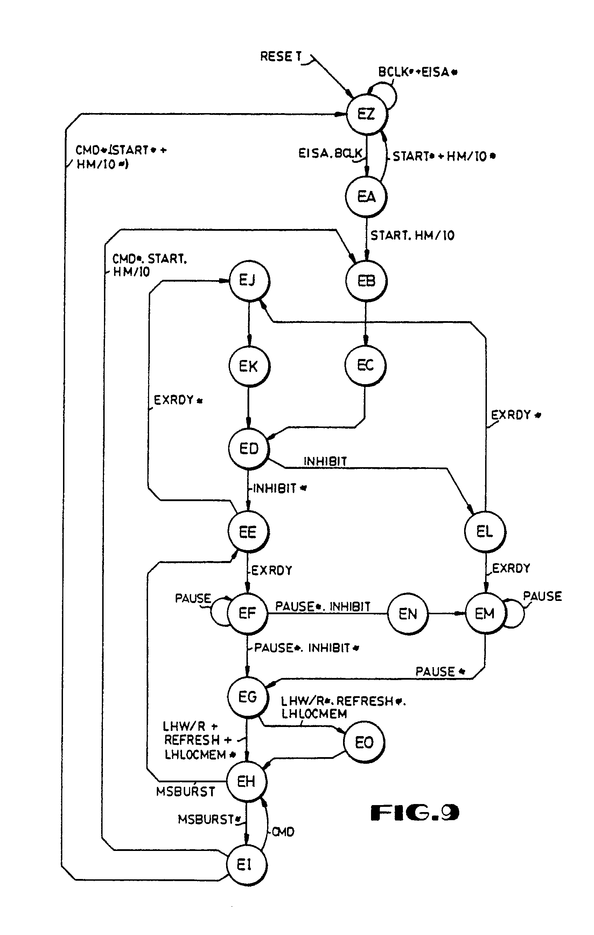

The state machine utilized in the host memory controller state machine and associated logic block 300 is shown in diagrammatic form in Fig. 9. Upon reset of the computer system C, the state machine is initialized to state EZ. Control remains in state EZ if the BCLK signal is low or an EISA master is not in control of the host bus 44 as indicated by the EISA* signal being high. The development of the EISA signal will be explained in detail. If the BCLK signal is high and an EISA master is in control of the host bus 144, control proceeds from state EZ to state EA. If the START* signal remains high or the HM/IO* signal should go high, indicating no cycle or an I/O operation, then control returns from state EA to state EZ. If the START* signal goes low and the HM/IO signal is high, indicating a memory operation, control proceeds on the next edge of the CLK signal from state EA to state EB. Control proceeds to state EC and to state ED on consecutive rising edges of a CLK signal.

There are two exits from state ED depending upon the state of the INHIBIT signal. The INHIBIT signal is used by a write-back cache controller (not shown) to indicate that the only valid data present is in the cache and therefore the memory must first have the proper data written from the cache into the memory array 58. For that purpose the INHIBIT signal is used to transform what normally would be a read operation to a write operation to allow the valid data to be written from the cache to the main memory array 58 and simultaneously allow the requesting device to read the data. If the INHIBIT signal is low, control proceeds to state EE. If the EXRDY signal is low, this is an indication that a wait state is to be added and therefore control proceeds from state EE to state EJ. Control proceeds from state EJ to state EK to state ED and generally to state EE, thus forming a one BCLK wait state loop in the preferred embodiment where the bus controller 48 is effectively dividing the CLK signal by four.

If the EXRDY signal had been high in state EE then this is an indication that no wait states are to be performed and control proceeds to state EF on the next rising edge of the GLK signal. Control remains in state EF if the PAUSE signal is high. The PAUSE signal is used to allow use of different memory devices if desired or to allow a cache controller sufficient time to perform certain snooping functions. If the PAUSE signal is low and the INHIBIT signal is low, then control proceeds from state EF to state EG.

If a write operation is occurring, a refresh operation is occurring or the main memory 58 is not being addressed, control proceeds to state EH. If it is a read operation, not a refresh operation and local memory is being addressed, control proceeds from state EG to state EO. Control then proceeds from state EO to state EH on the next rising edge of the CLK signal. Control proceeds from state ES to state EE if the MSBURST signal is high, indicating that a burst is desired. Thus a four CLK signal cycle is performed for burst write operations and a five CLK signal cycle operation is used for burst reads. If the MSBURST* signal is high, indicating no burst, control proceeds from EH state to state EI. If the CMD signal is high, control returns to state EH until the operation is completed. If the CMD* signal is high, the START* signal is low and the HM/IO signal is high, indicating that the next cycle has started and is a memory operation, control returns from state EI to state EB to begin the next memory operation and to allow RAS precharge time. If however the CMD* signal is high, and either the START* signal or the HM/IO* signal are high, thus indicating that either a memory cycle is not starting or on I/O operation is commencing, control returns from state EI to state EZ and state EA to idle until the next EISA memory cycle commences.

If prior to exiting state ED the INHIBIT signal goes high, indicating that a write-back cache controller must write the data, control proceeds from state ED to state EL. If the EXRDY signal is low, indicating that the memory devices are not ready then control proceeds from state EL to state EJ. If however the devices are ready, as indicated by the EXRDY signal being high, then control proceeds to state EM. Control also arrives at state EM from state EN, where it arrives from state EF if the PAUSE signal was not asserted and the INHIBIT signal was asserted. Control remains in state EM while the PAUSE signal is high, thus indicating a desire to hold. Control transfers from state EM to state EG on the rising edge of the CLK signal when the PAUSE signal is low.

It is noted that the various states of the state machine have been indicated on Figs. 3-7 so that operation of the state machine in relation to the timing diagrams can be easily be tracked.

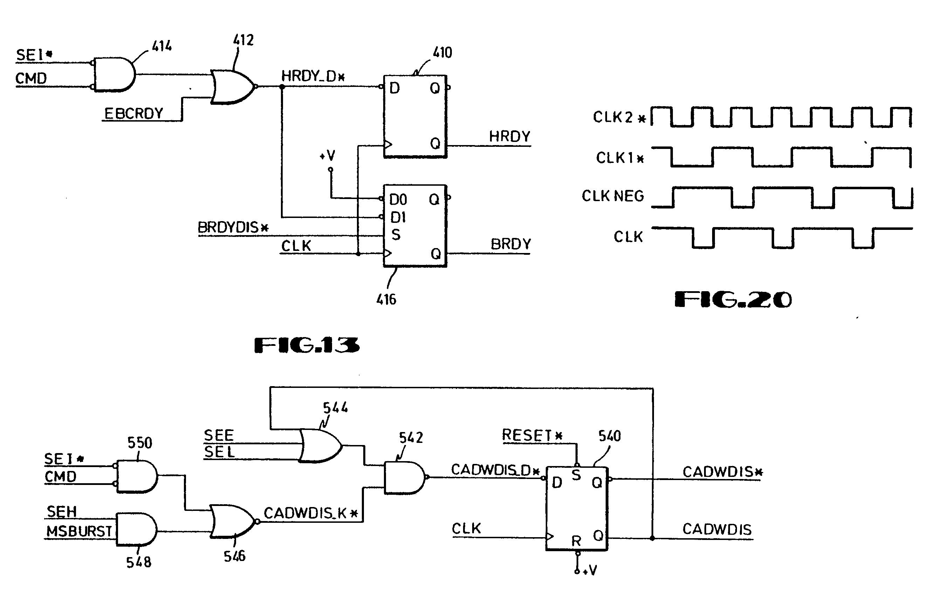

Clocking signals are utilized to advance the state machine and perform various functions in the memory controller 62 as indicated by the timing diagrams. The CLK2* signal is provided to the inverted clocking input of a D-type flip-flop 350 (Fig. 12). The noninverted output of the flip-flop 350 is connected to the inverted D input so that a divide by two toggle configuration develops. The noninverted output is considered to be the CLK1 signal so that the inverting output of the flip-flop 350 is the CLK1* signal. The RESET* signal, which goes low to indicate computer system G reset, is provided to the reset input of the flip-flop 350 to allow synchronization with the computer system G. The CLK1* signal is provided as one input to a 2 input NAND gate 352, whose other input is the CLK2* signal. The output of this gate 352 is called the CLKNEG signal and is used in clocking certain portions of the RAS signals. The CLK1 signal is connected as one input to a 2 input NAND gate 354, whose other input is connected to the CLK2* signal. The output of this NAND gate 354 is the CLK signal, which is used to advance the state machine and to latch numerous signals in the memory controller 62. The resulting waveforms are shown in Fig. 20.

Because the memory controller 62 is based on a synchronous state machine, combinations of the various states are used to produce the necessary signals as shown in the timing diagrams. The logic utilizing that will now be described.

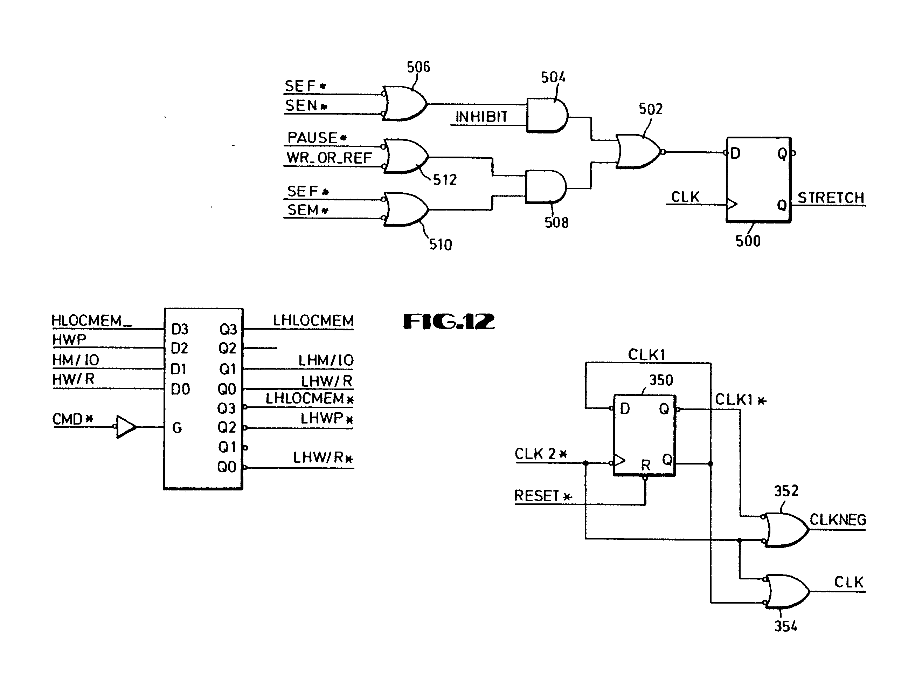

The EISA signal is developed at the output of a 2 input NOR gate 360 (Fig. 11) whose inputs are the HLDA* signal, which indicates that the processor system is not acknowledging a hold request, and the output of a 2 input NOR gate 362. One input signal to the NOR gate 362 is provided by the noninverted output of a D-type flip-flop 364 whose inverted reset input is connected to the output of an inverter 366, whose input is the RESET signal which indicates that the computer system C is being reset. The clocking input of the flip-flop 364 is connected to the BCLK* signal and the D input is connected to the output of a 2 input AND gate 367. One input of the AND gate 367 is connected the REFRESH signal, while the other input is inverted and is connected to the EMSTR16* signal. The EMSTR16* signal is provided by the bus controller 48 and indicates that an ISA master device is in control of the bus when active low. During EISA cycles the EMSTR16* signal is high. The EMSTR16* signal is also provided as one input to a 2 input AND gate 368, whose output is connected to the D input of a D-type flip-flop 370. The noninverted output of the flip-flop 370 is the second input to the NOR gate 362. The inverted reset input of the flip-flop 370 is connected to the output of the inverter 366. The flip-flop 370 has an inverted clocking input which is connected to the BCLK* signal.

The second input to the AND gate 368 is provided by the noninverted output of a D-type flip-flop 372. The inverted reset input of the flip-flop 372 is connected to the output of the inverter 366. The clocking input to the flip-flop 372 is connected to the BCLK* signal. The D input to the flip-flop 372 is connected to the output of an inverter 374, whose input is connected to the HLDA* signal. Thus the EISA signal is true or high whenever a 16 bit ISA master is not in control or the one of the processors P1 and P2 is not in control of the bus.

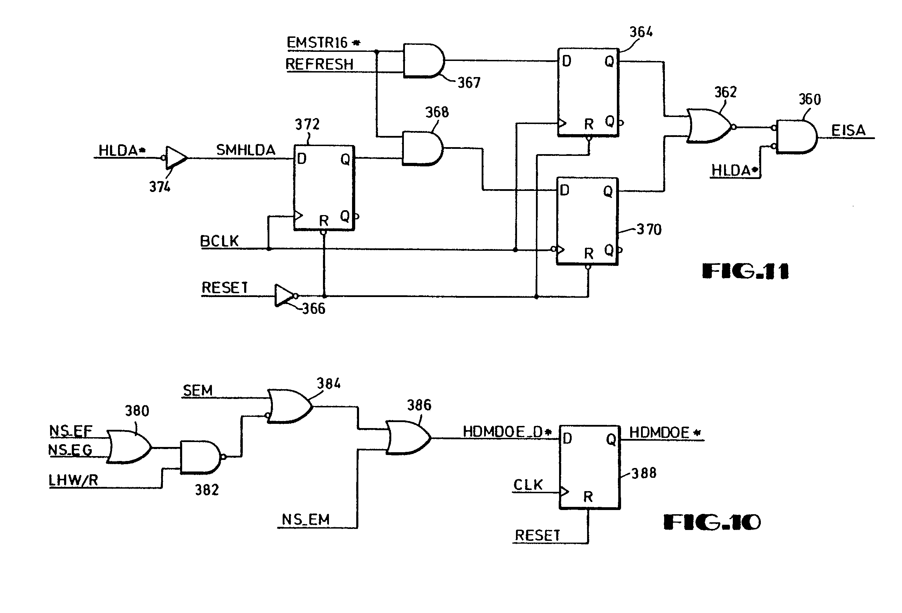

Signals indicating that the next state of the state machine is state EF or state EG are combined by an OR gate 380 (Fig. 10), whose output is connected to one input of a 2 input NAND gate 382. The second input of the NAND gate 382 receives a latched version of the HW/R signal which signifies, when high, that a write operation is occurring. The output of the NAND gate 382 is connected to an inverted input of a 2 input OR gate 384. The other input of the OR gate 384 is connected to a signal that indicates the state machine is in state EM. The output of the OR gate 384 is connected to one input of a 2 input NOR gate 386. The NOR gate 386 also receives a signal which indicates that the next state of the machine will be state EM. The output of the NOR gate 386 is the HDMDOE_D* signal, which is provided to the D input of a D-type flip-flop 388, whose clocking input is connected to the CLK signal and whose reset input is connected to the RESET signal. The noninverted output of the flip-flop 388 is the HDMDOE* signal, which is presented to the memory devices to act as the memory write strobe and to the data buffer 60 as an output enable signal.

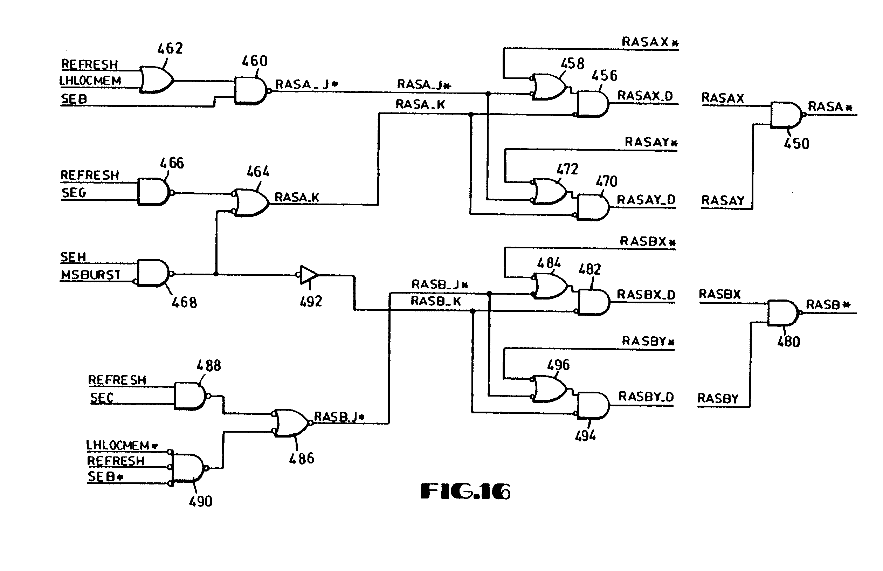

The MDHDOE* signal is developed as the output of a 2 input NAND gate 400 (Fig. 15). One input is connected to the INHIBIT* signal, while the other input is connected to the output of a 6 input AND gate 402. The 6 input signals to the AND gate 402 are the EISA signal, a latched HLOCMEM signal indicating a memory operation to the main memory 58, the latched HM/IO signal, a latched HW/R* signal indicating a read operation, the CMD signal and the REFRESH* signal. Thus the output of the AND gate 402 is high during the data portion of EISA memory read operations to the main memory 58. Therefore the data buffers 60 are enabled to provide data from the memory devices, unless an inhibit cycle is in progress and the cache is providing the data.

The HRDY signal is developed by the noninverted output of a D-type flip-flop 410 (Fig. 13) whose clock input is connected to the CLK signal. The inverted D input is connected to the output of a 2 input NOR gate 412 whose inputs are a signal representing that the bus controller 48 is ready or the output of a 2 input NOR gate 414. The two inputs of the NOR gate 414 are connected to the CMD signal and a signal indicating that the state machine is not in state EI. The output of NOR gate 412 is also connected to the inverting D1 input of a multiplexed input flip-flop 416. The inverted DO input is connected to a high level logic signal. The select input, the level of which controls whether the DO or D1 input is to be used based on a low or high level, respectively, is connected to the BRDYIS* signal, which is active or low on the first double word read of a train or quadruple word cache miss fill operation. This signal is one of several signals used to allow a second double word to be read during cache miss read situations without interfering with the cache controller 24. For more details of operation of this train logic, please see copending application number 90108942.5 entitled "Quadruple Word, Multiplexed Paged Mode and Cache Memory", filed May 11, 1990 and filed in the name of the applicant of this application, and incorporated by reference. This connection keeps one of the read operations invisible to the cache controller 24. The flip-flop 416 is clocked by the CLK signal and produces the BRDY signal at its noninverting output.

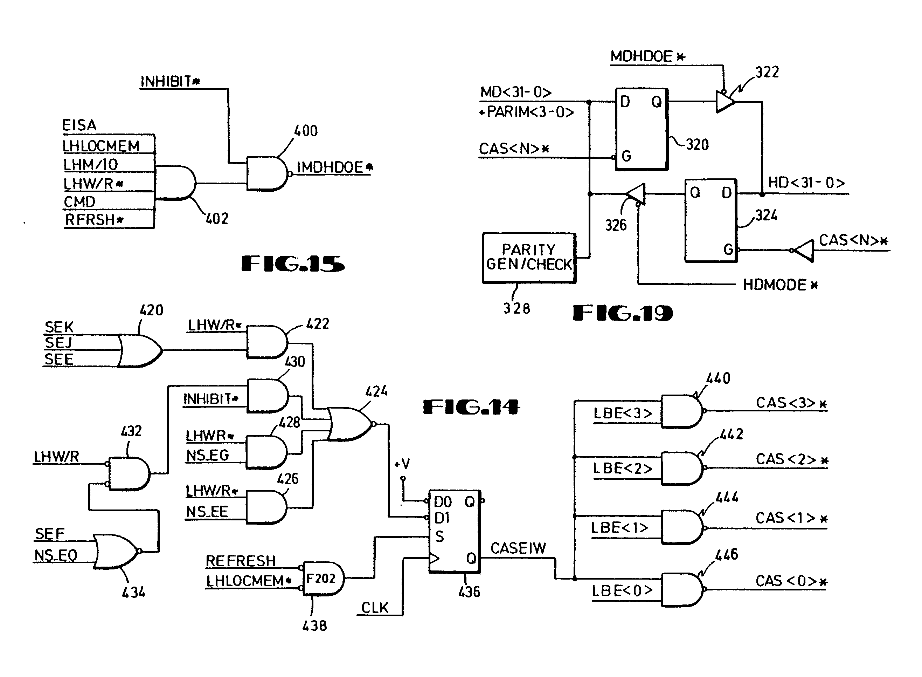

Signals indicating that the state machine is in state EX, state EJ or state EE are provided as the three inputs to a 3 input OR gate 420 (Fig. 14). The output of the OR gate 420 is one input to a 2 input AND gate 422 whose other input is the LHW/R* signal, which is an inverted version of the latched HW/R signal. The output of the AND gate 422 is provided as one input to a 4 input NOR gate 424. A second input to the NOR gate 424 is provided by the output of a 2 input AND gate 426 whose inputs are the LHW/R* signal and a signal that indicates that the next state of the state machine is state EE. A third input to the NOR gate 424 is provided by the output of a two input AND gate 428 whose two inputs are the LHWP* signal, and a signal that indicates that the next state of the state machine is state EG. The LHWP signal is a version of the host bus write protect signal which is latched when the RASA* signal is low and transparent when the RASA* signal is high. This latching insures that the LHWP signal does not change during page hit operations. The fourth input to the NOR gate 424 is provided by the output of a 2 input AND gate 430 whose inputs are the INHIBIT* signal and the signal provided by the output of a 2 input NOR gate 432. The first input of the NOR gate 432 receives the LHW/R signal, while the second input is connected to the output of a 2 input NOR gate 434. The 2 inputs to the NOR gate 434 are a signal which indicates that the state machine is in state EF and a signal which indicates that the next state of the state machine is state EO. Thus the output of the NOR gate 424 goes low when the CAS* signal is to be lowered to properly strobe in the column address.

The output of the NOR gate 424 is connected to the inverted D1 input of a multiplexed input flip-flop 436. the inverted DO input is connected to a high logic level. The clocking signal to the flip-flop 535 is provided by the CLK signal. The multiplexer select input is connected to the output of a 2 input NOR gate 438 whose inputs are the REFRESH signal and the latched version of the HLOCMEM* signal. The REFRESH signal indicates that a refresh operation is in process for the dynamic RAM's. The noninverted output of flip-flop 436, which goes high during non-protected, local, non-refresh memory write cycles, is connected to one input of a series of four 2 input NAND gates 440, 442, 444 and 446. The other input to each of these NAND gates 440, 442, 444 and 446 is respectively one of the LBE<3>, LBE<2>, LBE<1> or LBE<0> signals, which represent inverted, latched versions of the byte enable signals present on the host bus 44. The outputs of the four NAND gates 440, 442, 444 and 446 are the CAS<3-0>* signals, which are used to enable the particular byte lane of both the buffer 60 and the memory array 58.

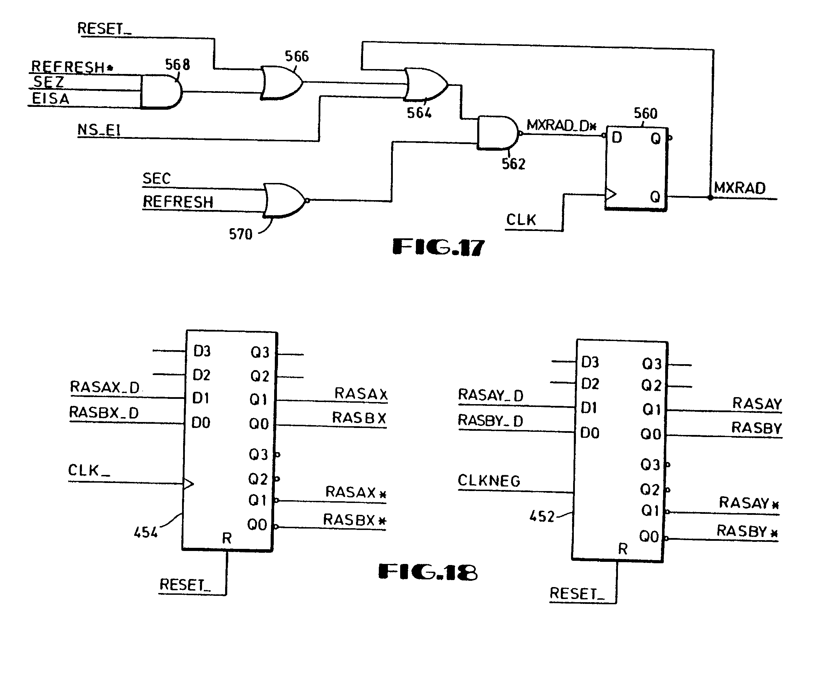

The row address strobe enable or RAS circuitry is developed as follows. The RASA* signal is produced as the output of a 2 input NAND gate 450 (Fig. 16) whose two inputs are the RASAX and RASAY signals. The RASAY signal, and its complement, the RASAY* signal, are provided by the outputs of the flip-flop 452 (Fig. 18), with respective D input being the RASAY_D signal. The CLKNEG signal provides the clocking signal for the flip-flop 452. The RASAX signal and its complementary RASAX* signal are produced as outputs of the flip-flop 454 based on a respective input of the RASAX_D signal. The CLK signal is used to clock the flip-flop 454. The RASAX_D signal is the output of a 2 input AND gate 456. One input to the AND gate 456 is connected to the output of a 2 input NAAD gate 458, one of whose inputs is the RASAX* signal and whose other input is the RASA_J* signal, which is the output of a two input NAND gate 460. One input of the NAND gate 460 is connected to a signal indicating that the state machine is in state EB, while the second input is* provided by the output of a two input OR gate 462. The two inputs to the OR gate 462 are the REFRESH and LHLOCHEM signals. The second input to the AND gate 456 is inverted and is provided by the output of a 2 input NAND gate 464. One of the inputs to the NAND gate 464 is the output of a 2 input NAND gate 466, whose inputs are the REFRESH and state EG signals. The second input to the NAND gate 464 is provided by the output of a 2 input NAND gate 468, whose effective inputs are the MSBURST* signal and an indication that the state machine is in state EH. The output of the NAND gate 464 is also provided to an inverted input to a 2 input AND gate 470 whose output is the RASAY_D signal. The second input to the AND gate 470 is connected to the output of a 2 input NAND gate 472 whose inputs are the RASA_J* signal and the RASAY* signal. Thus it can be seen that this combination of logic is such that the RASA* signal will go low on a rising edge of the CLK1* signal and will go high on a falling edge of the CLK1* signal because of the use of the two latches 452 and 454.

The RASB* signal has similar timing in non-refresh cycles and has slightly altered timing in refresh cycles so that the current spikes produced when the refresh operations occur are slightly reduced or spread out over time. The RASB* signal is provided as the output of a 2 input NAND gate 480 whose inputs are the RASBX and RASBY signals. The RASBX and RASBX* signals are provided as outputs from the flip-flop 454 which has an input of the RASBX_D signal. The RASBY and RASBY* signals are provided as outputs of the flip-flop 452, with a respective input signal of the RASBY_D signal. Thc RASBX_D signal is produced as the output of a 2 input AND gate 482, one of whose inputs is provided by the output of a 2 input NAAD gate 484. One input to the NANO gate 484 is the RASBX* signal, while the other input is provided by the output of a 2 input AND gate 486. One input to the AND gate 486 is provided by the output of a 2 input NAND gate 488 whose inputs are the REFRESH signal and a signal that indicates that the state machine is in state EC. The second input to the AND gate 486 is provided by the output of a 3 input OR gate 490 whose inputs are the LHLOCMEM* signal, the REFRESH signal, and a signal indicating that the state machine is not in state EB. The second input to the AND gate 482 is inverted and is connected to the output of an inverter 492, whose input is connected to the output of the NAND gate 468. The RASBY_D signal is produced by the output of a 2 input AND gate 494, one of whose inputs is connected to the output of a 2 input NAND gate 496 whose inputs are the RASBY* signal and the output of the AND gate 486. The second input to the AND gate 494 is inverted and is connected to the output of inverter 492. Thus it can be seen that there is a slight timing difference in the refresh portions of the cycle so that the RASA* and RASB* signals go low at slightly different intervals.

The STRETCH signal is provided at the noninverted output of a D-type flip-flop 500 (Fig. 12). The clocking signal of the flip-flop 500 is the GLK signal, while the D input is inverted and is connected to the output of a 2 input NOR gate 502. One input to the NOR gate 502 is connected to the output of a 2 input AND gate 504 whose inputs are connected to the INHIBIT signal and the output of a 2 input NAND gate 506. The inputs to the NAND gate 506 are signals that indicate that the state machine is not in state EF or not in state EN. The second input to the NOR gate 502 is provided by the output of a 2 input AND gate 508. One input to the AND gate 508 is provided by the output of a 2 input NAND gate 510, whose inputs are signals which indicate that the state machine is not in state EF and not in state EM. The second input to the AND gate 508 is provided by the output of a 2 input NAND gate 512. The inputs to the NAND gate 512 are a signal which indicates that the write or refresh cycle is in operation and the PAUSE* signal. Thus the STRETCH signal is provided for only one CLK cycle during normal read operations and during certain portions of inhibited cycles.

The construction of the multiplexer 308 is shown in Fig. 23. It is noted that the block shown in Fig. 23 is represented as a single bit but it is noted that eleven like circuits are present, the difference being the bit position of the appropriate busses connected to each circuit. The MA<10-0> signals are produced as the output of a 2 input OR gate 520. One input to the OR gate 520 is connected to the output of a 2 input NOR gate 522, one of whose inputs receives the MXCADR* signal, which is a signal that causes the multiplexer to select the signals received at the other input to the NOR gate 522, which are the CADR<10-0>* signals. The signals are effectively the 22nd, 20th and tenth to second bit positions of the address signals presented to the memory controller 62. These are the column addresses appropriate for the particular memory device, with bits 20 and 22 being provided to allow for connection of various memory devices, such as 256kb x 1, 256kb x 4, 1Mb xl or 1Mb x 4, with their differing numbers of address inputs.

The other input to the OR gate 520 is inverted and is connected to the output of a NOR gate 524 which has three inputs. The first input is connected to the output of an AND gate 526, whose inputs are the MXREF signal, which is the REFRESH signal from the host bus 44 and indicates that a refresh cycle is occurring and therefore the refresh addresses should be supplied, and the REFAD<10-0> signals which correspond to the bits 2-12 of the incoming address bus and are the refresh addresses. The second input of the NOR gate 524 is connected the output of a 2 input AND gate 528 whose inputs are the MXRAD signal, which indicates that the multiplexer should be supplying the row addresses, and the RAD<10-0> or row address signals, which correspond to the bit positions 23, 21 and 19-11 of the incoming address bus. The final input to the NOR gate 524 is connected to the output of an AND gate 530 which has as its inputs the MXCADW signal, which indicates that this is a write operation column address to be provided, and the CADW<10-0> signals, which are an intermittently latched version of the CADR<10-0>* signals. This intermittent latching, in combination with the latching of the data by the data buffer 60, is provided so that the control of the host bus 44 can be released before the data is fully stored in the memory devices, the cycle terminating earlier than otherwise possible. The CADR<10-0>* signals are produced by the noninverted output of a series of eleven multiplexed flip-flops 532. The clocking signal is the CLK signal, while the inverted output of the flip-flop 532 is connected to the inverted D1 input. The inverted DO input is connected to the CADR<10-0>* signals to provide the column addressing lines necessary. The select input to the multiplexed flip-flop 532 is provided by the CADWDIS or column address write disable signal, which enables a latching effect at the states of interest. For those states of interest the latching effect applies and the CADR<10-0>* signals are not passed through the flip-flop 532.

The CADWDIS signal is produced as the noninverting output of a D-type flip-flop 540 (Fig. 13). The inverted set input to the flip-flop 540 is connected to the RESET* signal and the clocking input is connected to the CLK signal. The inverted input to the flip-flop 540 is connected to the output of a 2 input NAND gate 542, one of whose inputs is connected to the output of a 3 input OR gate 544. One input to the OR gate 544 is the CADWDIS signal while the other inputs indicate that the state machine is in state EE or EL. The second input of the NAND gate 542 is provided by the output of a two input NOR gate 546. One input to the NOR gate 546 is provided by the output of a 2 input AND gate 548. The inputs to the AND gate 548 are the MSBURST signal and a signal indicating that the state machine is in state EH. Second input to the NOR gate 546 is provided by the output of a 2 input NOR gate 550. The 2 inputs to the NOR gate 550 are the CMD signal and a signal indicating that the state machine is not in state EI. Thus the CADWDIS signal is high for a certain period after a memory cycle completes.

The row address multiplexing selection signal MXRAD is produced as the noninverting output of a D-type flip-flop 560 (Fig. 17). The clocking input to the flip-flop 560 is provided by the CLK signal. The inverted D input of the flip-flop 560 is connected to the MXRAD_D* signal which is produced by the output of a 2 input NAND gate 562. One input to the NAND gate 562 is connected to the output of a 3 input OR gate 564, one of whose inputs is the MXRAD signal. The second input to the OR gate 564 is a signal indicating that the next state of the state machine is state EI, while a third input to the OR gate 564 is the output of a 2 input OR gate 566. One input to the OR gate 566 is the RESET signal, while the other input is connected to the output of a 3 input AND gate 568 whose inputs are the EISA signal, the REFRESH* signal and a signal indicating that the state machine is in state EZ. The second input to the NAND gate 562 is the output of a 2 input NOR gate 570, whose input signals indicate that the state machine is in state EC or that a refresh cycle is present. Thus the signal is high during refresh cycles, after reset to set up for an initial cycle, during states EZ to EC during EISA operations or during states EI to EC during EISA operations.

The MXCADR* signal is produced as the inverting output of a D-type flip-flop 574 (Fig. 22) whose clocking signal is connected to the CLK signal. The inverted D input to the flip-flop 574 is connected to the output of a 2 input NAND gate 576. One of the inputs to the NAND gate 576 is connected to the output of a 2 input OR gate 578, one of whose inputs is the output of a 2 input NOR gate 580. The inputs to the NOR gate 580 are the INHIBIT* signal and a signal indicating that the state machine is not in state EQ. The second input of the OR gate 578 is connected to the output of a 2 input OR gate 582, whose inputs are connected to the MXCADR signal and to the output of a 3 input AND gate 584. The three inputs to the AND gate 584 are the REFRESH* signal, the LHW/R* signal and a signal indicating that the state machine is in state EG. The second input of the NAND gate 576 is connected to the output to a 3 input NOR gate 586. One input of the NOR gate 586 is connected to the RESET signal. The second input to the NOR gate 586 is a signal which indicates that the next state of the state machine is state EM. The third input to the NOR gate 586 is a signal indicating that the next state of the state machine is state EI.

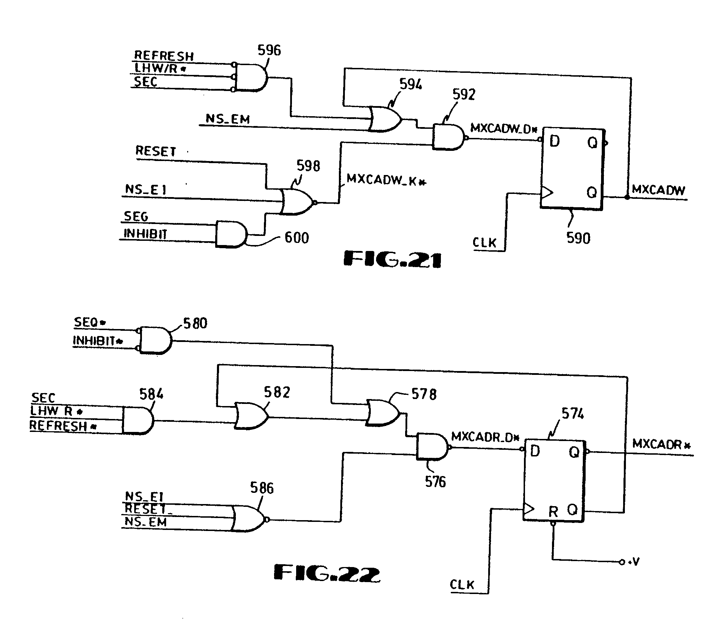

The MXCADW signal is produced as the noninverting output of a D-type flip-flop 590 (Fig. 21) whose clocking input is connected to the GLK signal. The inverted D input of the flip-flop 590 is connected to the output of a 2 input NAND gate 592. One input to the NAND gate 592 is connected to the output of a 3 input OR gate 594, one of whose inputs is connected to a signal that indicates that the next state of the state machine is state EM. Tne second input of the OR gate 594 is connected to the MXCADW signal. The third input of the OR gate 594 is connected to the output of a 3 input NOR gate 596. The inputs to the NOR gate 596 are the REFRESH signal, the LHW/R* signal and a signal indicating the state machine is not in state EC. The other input of the NAND gate 592 is connected to the output of a 3 input NOR gate 598. One input to the NOR gate 598 is the RESET signal. The second input of the NOR gate 598 is connected to the output of a 2 input AND gate 600 whose inputs are signals indicating that the state machine is in state EG and the INHIBIT signal. The third input of the NOR gate 598 is a signal indicating that the next state of the state machine is state EI.

The foregoing disclosure and description of the invention are illustrative and explanatory thereof, and various changes in the size, shape, materials, components, circuitry, wiring connections and contacts, as well as in the details of the illustrated circuitry and construction and method of operation may be made without departing from the spirit of the invention.

**Claims**

1. A computer system, comprising:
a first bus (46) for receiving interchangeable circuit boards, said first bus including address (84-88), control (76,78) and data (80,82) lines, with address, control and data signals presented on said lines conforming to a standard for memory cycle operations, said control signals including a synchronizing signal (BGLK) and a signal for indicating a desire to add a wait state of at least one synchronizing signal cycle duration;
a basic system clock signal (CLK);
means (48) for developing said synchronizing signal for use on said first bus, wherein said synchronizing signal is developed by dividing said basic system clock signal and wherein a phase of said synchronizing signal can be extended upon receipt of a signal (STRETCH);
a second bus (44) for transferring data and including address, data and control lines;
means (48, 50,52) for coupling said first bus (46) to said second bus (44) to allow transfer of data, address and control signals between said buses;
memory means (58) coupled to said second bus (44); and
a memory controller (62) connected to said second bus, said synchronizing signal means and said memory means for controlling operation of said memory means and providing an extension signal (STRETCH) to said synchronizing signal means for extending said synchronizing signal during memory means read operations to alleviate the necessity of providing said wait state signal.

2. The computer system of claim 1, wherein said means for coupling said buses includes buffer means (50) for transferring data signals from said first bus to said second bus and buffer means (50) for transferring data signals from said second bus to said first bus.

3. The computer system of claim 1 or claim 2, wherein said memory means includes memory devices, address multiplexing means (308) coupled to said second bus address lines and said memory devices for transferring address signals from said second bus to said memory devices and memory data buf fer means (60) coupled to said second bus data lines and said memory devices for transferring data signals from said memory devices to said second bus.

4. The computer system of claim 3, wherein said memory controller (62) is connected to said address multiplexing means and said memory data buffer means and wherein said memory controller controls selection of said address signals provided by said address multiplexing means and controls the output of said memory data buffer means.

5. The computer system of claim 4, wherein said memory devices are dynamic random access memories having row and column address strobe inputs and said memory controller (62) includes means for developing row and column address strobe signals for presentation to said row and column address strobe inputs of said memory devices.

6. The computer system of any of claims 1 to 5, wherein said memory controller receives (62) said basic system clock signal and said extension signal is active for one cycle of said basic system clock signal.

## FIG.1A

EP 0 445 463 A1

**FIG.1B**

EP 0 445 463 A1

FIG.2A

FIG.2B

EP 0 445 463 A1

FIG.3

**FIG.4**

1. EISA READ WITH 2 BCLK CMD*

2. EISA WRITE WITH 1.5 BCLK CMD* (DMA ONLY)

MSBURST SAMPLED EARLY FOR RAS ONLY

Signals: BCLK, STATE, START*, CMD*, EXRDY, MSBURST*, CLK1*, HRDY*, INHIBIT*, PAUSE*, STRETCH*, HLOCMEM*, HADDR, HDATA, MA10 0, RAS*, CAS(N)*, MDHDOE(N)*, HDMDOE* ALSO USED FOR MWE*, MDATA

# FIG.5

EISA READ WITH 1WS    BURST READ WITH 1WS

EP 0 445 463 A1

FIG.6

EISA WRITE WITH 1WS    BURST WRITE WITH 1WS

EP 0 445 463 A1

# FIG.7

REFRESH CYCLE

| | | | | | | | | | | | | | | |
|---|---|---|---|---|---|---|---|---|---|---|---|---|---|---|
| CLK1 | 250 | 252 | 254 | | 256 | 258 | | | | 260 | 262 | 264 | | |

BCLK
STATE: EA EZ EZ EZ EA EB EC ED EE EF EG EH EI EZ
START
CMD
EXRDY
MSBURST
REFRESH
HADDR
HDATA
MA 10..0    ROW    REFRESH    ROW
RASA
RASB
CAS(N)
MDHDOE(N)
HDMDOE
MDATA

# FIG.23

CADR<10..0>*(AD 22,20,10-2>*)

MXCADR*

MXREF
REFAD<10..0>(AD<12-2>)
MXRAD
RAD<10..0>(AD<23,21,19-11>)
MXCADW
CADW<10..0>

CADWDIS
CLK

D0
D1
S
Q
Q

532

522
526
528
530
524
520

MA<10..0>

308

# FIG.8

300

MISC.INPUTS
CLK*

STATE
MACH.
&
LOGIC

REFRESH<10-0>
ROW<10-0>
COLUMN READ<10-0>
WRITE
<10-0>

308

MA<10-0>

304

P Q

306

CLK*
MISC.INPUTS

OUTPUT
REG. & LOGIC

MISC.OUTPUTS

302

FIG.9

24

FIG.11

FIG.10

EP 0 445 463 A1

## FIG.12

SEF*
SEN*
506

INHIBIT
504

502

D    Q

CLK

STRETCH
Q

500

PAUSE*
WR. OR. REF
512

SEF*
SEM*
510

508

HLOCMEM_    D3    Q3    LHLOCMEM
HWP    D2    Q2
HM/IO    D1    Q1    LHM/IO
HW/R    D0    Q0    LHW/R
Q3    LHLOCMEM*
CMD*    G    Q2    LHWP*
Q1
Q0    LHW/R*

CLK1

350
D    Q    CLK1*

CLK 2*    R    Q

RESET*

352
CLKNEG

354
CLK

EP 0 445 463 A1

SEI*
CMD
414
412
EBCRDY
HRDY_D*
410
D    Q
Q    HRDY
+V
D0   Q
D1
S
BRDYDIS*
CLK      Q    BRDY
416

**FIG.13**

CLK2 *
CLK1 *
CLK NEG
CLK

**FIG.20**

SEI*
CMD
550
SEE
SEL
544
542
RESET*
540
CADWDIS_D*
D  S  Q    CADWDIS*
SEH
MSBURST
548
546
CADWDIS_K*
CLK
R  Q    CADWDIS
+V

INHIBIT*

EISA
LHLOCMEM
LHM/IO
LHW/R*
CMD
RFRSH*

402

400

IMDHDOE*

## FIG.15

MDHDOE *

MD<31-0>
+PARIM<3-0>

322

D    Q

320

CAS<N>*    G

HD<31-0>

326    Q    D

324

PARITY
GEN/CHECK

G    CAS<N>*

328    HDMODE *

## FIG.19

SEK
SEJ
SEE

420    LHW/R*    422

430

INHIBIT*

428

424

## FIG.14

440

LBE<3>    CAS<3>*

432    LHWR*
NS.EG

442

LHW/R

426

LBE<2>    CAS<2>*

LHW/R*
NS.EE

+V

444

SEF
NS.EQ

D0    Q

D1

S

LBE<1>    CAS<1>*

434

REFRESH
LHLOCMEM*    F202

CASEIW

446

Q

436    LBE<0>    CAS<0>*

438    CLK

EP 0 445 463 A1

FIG.16

EP 0 445 463 A1

RESET_

REFRESH*    568        566
SEZ
EISA

NS_EI

564
562    MXRAD_D*    560
D    Q

SEC
REFRESH

570

CLK

Q    MXRAD

**FIG.17**

D3    Q3
D2    Q2
RASAX_D    D1    Q1    RASAX
RASBX_D    D0    Q0    RASBX

Q3
CLK_    Q2
Q1    RASAX*
454    Q0    RASBX*

R

RESET_

D3    Q3
D2    Q2
RASAY_D    D1    Q1    RASAY
RASBY_D    D0    Q0    RASBY

Q3
CLKNEG    Q2
Q1    RASAY*
452    Q0    RASBY*

R

RESET_

**FIG.18**

**FIG.21**

**FIG.22**

European
Patent Office

EUROPEAN SEARCH
REPORT

Application Number

EP 90 31 1701

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | GB-A-2 181 578 (SUN MICROSYSTEMS INC.) <br> * Whole document * | 1-5 | G 06 F 13/42 |
| Y | E.D.N. ELECTRICAL DESIGN NEWS, vol. 27, no. 2, January 1982, pages 117-121, Boston, Mass., US; T. WILLIAMSON: "Avoid refresh-timing conflicts in muC memory expansion" <br> * Figures 1,2; page 117, line 1 - page 119, line 6 * | 1-5 | |
| A | DE-A-3 428 418 (HITACHI LTD) <br> * Figure 3; claim 1; page 4, line 1 - page 7, line 10 * | 1 | |
| Y | WO-A-8 902 128 (MOTOROLA INC.) <br> * Figures 1,2,3; claims 4-9; page 1, line 1 - page 3, line 6 * | 1,2 | |
| A | US-A-4 050 096 (MOTOROLA INC.) <br> * Claims 1-3; figure 11; column 12, line 26 - column 13, line 57 * | 1 | |

|  | TECHNICAL FIELDS SEARCHED (Int. Cl.5) |
|---|---|
|  | G 06 F 13 |

The present search report has been drawn up for all claims

| Place of search | Date of completion of search | Examiner |
|---|---|---|
| The Hague | 18 March 91 | JONES H.D.B. |